# EUROPEAN PATENT SPECIFICATION

(11) **EP 1 048 495 B1**
(45) Date of publication and mention of the grant of the patent: **12.05.2004**
(21) Application number: 99303227.5
(22) Date of filing: 26.04.1999
(51) Int. Cl.: B60C 23/04

(54) **Power supply unit for a pressure-sensing device that is concealed by a tire of a vehicle wheel**
Stromversorgungseinheit für eine Druckmessvorrichtung innerhalb eines Fahrzeugrades
Unité d'alimentation éléctrique pour un dispositif de mesure de pressions à l'intérieur d'un pneu de véhicule

(43) Date of publication of application: 02.11.2000
(73) Proprietor: Huang, Teng-Yi, Pan-Chiao City (TW)
(72) Inventor: Huang, Teng-Yi, Pan-Chiao City (TW)
(74) Representative: Brandon, Paul Laurence

(56) References cited:
- EP-A- 0 351 997
- US-A- 4 737 760

## Description

The invention relates to a pressure-sensing device for a vehicle wheel, more particularly to a power supply unit for a pressure-sensing device that is concealed by a tire of a vehicle wheel.

U.S. Patent No. 4,048,614 discloses a tire pressure alarm system for a vehicle wheel. The alarm system is mounted on an inner end of an air inlet valve that extends into an airtight chamber confined by a wheel rim and a tire. The alarm system is responsive to air pressure inside the chamber so as to generate a radio signal when the air pressure is at a predetermined low pressure.

U.S. Patent No. 5,798, 689 discloses a pressure gauge for a vehicle wheel. The pressure gauge includes a casing formed with an aperture and secured to the wheel rim such that the casing is concealed by a tire on the wheel rim. A signal generating device is disposed in the casing, and includes a pressure-sensing unit which generates an analog voltage signal that varies in accordance with the pressure entering the aperture, a signal converting unit which converts the analog voltage signal from the pressure-sensing unit into a digital output signal, an encoder unit which compares the digital output signal from the signal converting unit with high and low pressure limits of a normal operating pressure range and which generates a pressure signal inclusive of the digital output signal and an identification code unique to the pressure gauge when the digital output signal is not within the normal operating pressure range, and a signal transmitter circuit which transmits the pressure signal from the encoder unit wirelessly. A receiver device includes a signal receiver circuit to receive the pressure signal transmitted by the pressure gauge, a decoder unit to receive and decode the pressure signal from the signal receiver circuit, and a display unit controlled by the decoder unit so as to indicate thereon which one of the vehicle wheels is under-or over-inflated and the pressure inside the under- or over-inflated one of the vehicle wheels.

The alarm system of U.S. Patent No. 4,048,614 and the pressure gauge of U.S. Patent No. 5,798,689 incorporate a power source, such as a battery cell, that is also concealed by the tire of the vehicle wheel. Thus, when the stored power of the power source has been used up, there is a need to remove the vehicle wheel from the vehicle chassis, deflate the tire, remove the tire from the wheel rim, and open the alarm system or the pressure gauge before replacement of the power source can be conducted. As such, replacement of the power source is a very complicated and inconvenient task.

European Patent Application EP-A2 0 351 997 corresponding with the preamble of claim 1 discloses a tyre fault device including a fault warning means to be coupled or incorporated in a tyre valve. The fault warning means includes, in the foot part of the valve, switch means responsive to pressure and or temperature conditions and radio signal means to transmit a signal for reception by receiver means. The switch means are housed in a chamber including a wall which moves in response to change in pressure and or temperature conditions and comprises a convex disc of bi-metal material. A battery may be housed in a removable cap and provide power via electrical leads to the radio signal means incorporated in the valve body.

US Patent 4737760 discloses a tyre pressure warning device which comprises a body adapted to be threaded into the valve stem of a tyre, a pressure sensing valve in the body and an elastomeric compression spring acting on the sensing valve to open it when the pressure in a tyre is below a predetermined value. A radio transmitter in the body transmits a warning signal when the switch is closed. A monitor detects a transmitted audio or radio signal and compares it with a stored reference signal and produces an output signal only when the transmitted signal corresponds to the stored signal. According to the present invention there is provided a valve assembly with a power supply unit, the valve assembly being adapted for use with a pressure-sensing device (4) in a vehicle wheel (3), the vehicle wheel (3) including a wheel rim (31) and a pneumatic tire (32) mounted on the wheel rim (31) so as to confine an airtight chamber therewith, the pressure-sensing device (4) being mounted on the wheel rim (31) inside the airtight chamber and being concealed by the pneumatic tire (32), the valve assembly including a tubular valve housing (7) having an outer end portion (71), an inner end portion (72) and an intermediate portion (73) between the outer and inner end portions (71, 72), the valve housing (7) confining a longitudinal air passage (70) that extends from the outer end portion (71) through the inner end portion (72), the intermediate portion (73) being adapted to be mounted on the wheel rim (31) in an airtight manner such that the inner end portion (72) extends into the airtight chamber and such that the outer end portion (71) extends outwardly of the wheel rim (31), the valve housing (7) being provided with a housing conductor that extends from the outer end portion (71) to the inner end portion (72) and that is adapted to be connected electrically to the pressure-sensing device (4), an air valve member (8) mounted in the air passage (70) of the valve housing (7) and operable so as to control air flow through the air passage (70), and a battery housing (6, 6') mounted on the outer end portion (71) of the valve housing (7) and adapted to receive a battery cell (5) therein, the battery housing (6, 6') being provided with electrically isolated first and second battery contacts (90, 631, 65) adapted to connect electrically and respectively with first and second terminals (52, 51) of the battery cell (5) when the battery cell (5) is received in the battery housing (6, 6'), the air valve member (8) includes a spring-loaded valve stem (80) with a conductive stem body (80a) that is adapted to be connected electrically to the pressure-sensing device (4), and insulation means for electrically insulating the stem body (80a) from the housing conductor, the first and second battery contacts (90, 631, 65) establishing electrical connection with the housing conductor and the conductive stem body (80a), respectively, when the battery housing (6, 6') is mounted on the outer end portion (71) of the valve housing (7), the battery housing (6, 6') including a connecting portion (60, 660) mounted removably on the outer end portion (71) of the valve housing (7), and a battery confining portion (61, 661) adapted to receive the battery cell (5) therein, the first battery contact (90, 631) being provided in the battery confining portion (61, 661), the second battery contact (65) being mounted in the battery housing (6, 6') at a junction of the connecting portion (60, 660) and the battery confining portion (61, 661), characterized in that: the valve housing (7) and the battery housing (6, 6') being formed from an electrically conductive material such that the valve housing (7) is provided inherently with the housing conductor, and such that the first battery contact (90, 631) is connected electrically to the valve housing (7) via the battery housing (6, 6').

Other features and advantages of the present invention will become apparent in the following detailed description of the preferred embodiments with reference to the accompanying drawings, of which:
Figure 1 is a schematic, partly sectional fragmentary view illustrating the first preferred embodiment of a power supply unit for a pressure-sensing device that is concealed by a tire of a vehicle wheel according to the present invention;
Figure 2 is a schematic, partly exploded sectional view of the first preferred embodiment;
Figure 3 is an inverted perspective exploded view illustrating a battery housing of the first preferred embodiment;
Figure 4 is a schematic, assembled sectional view of the first preferred embodiment;
Figure 5 is a schematic partly sectional view of the battery housing of Figure 3;
Figure 6 is a schematic sectional view of a modified embodiment of a battery housing for the power supply unit of the present invention; and

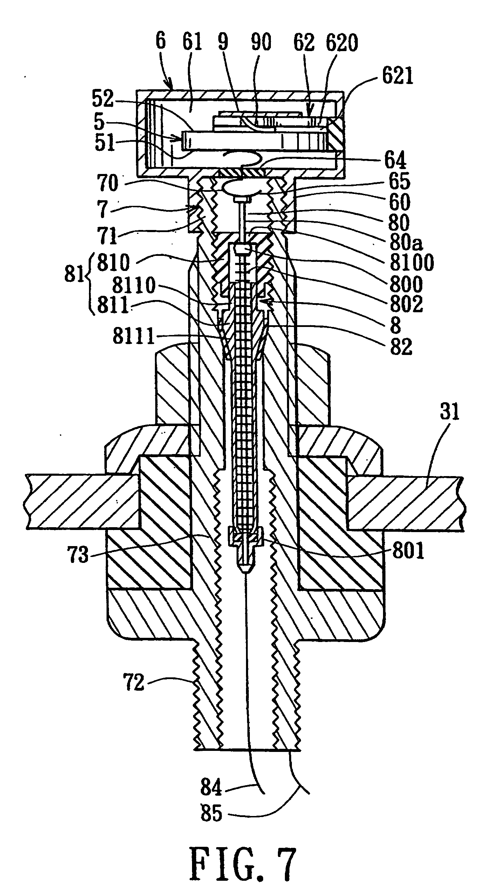

Figure 7 is a schematic, assembled sectional view illustrating the second preferred embodiment of a power supply unit for a pressure-sensing device according to the present invention.

Before the present invention is described in greater detail, it should be noted that like elements are denoted by the same reference numerals throughout the disclosure.

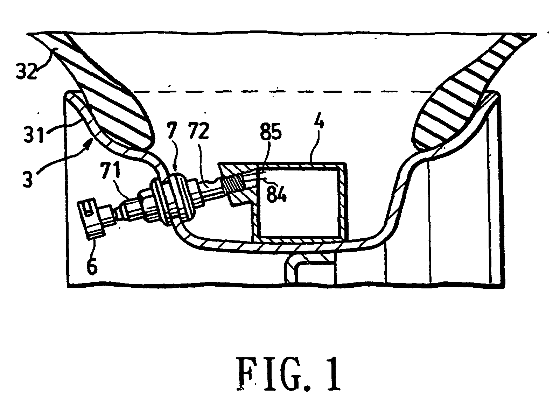

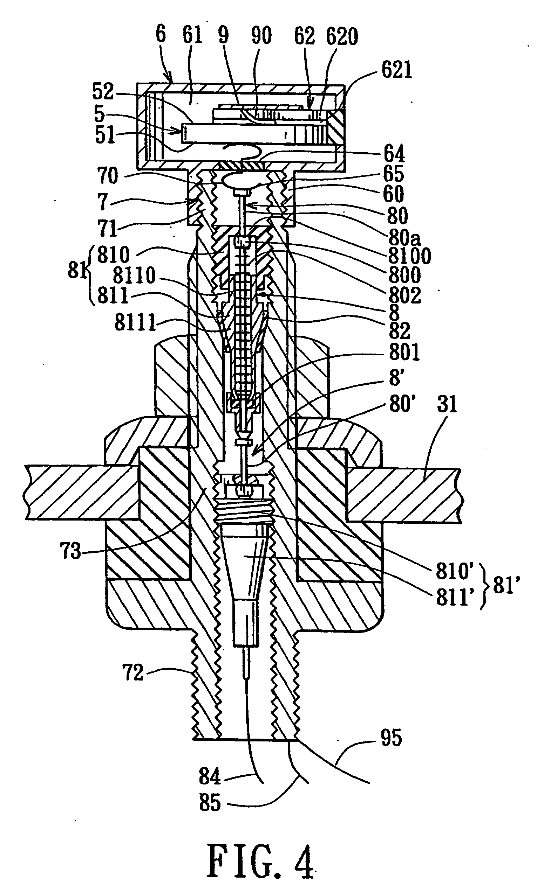

Referring to Figures 1 to 4, the first preferred embodiment of a power supply unit according to the present invention is shown to be adapted for use with a pressure-sensing device 4 that is mounted on a vehicle wheel 3. The vehicle wheel 3 includes a wheel rim 31 and a pneumatic tire 32 mounted on the wheel rim 31 in a conventional manner so as to confine an airtight chamber therewith. The pressure-sensing device 4 is mounted on the wheel rim 31 and is disposed inside the airtight chamber so as to be concealed by the pneumatic tire 32. The pressure-sensing device 4 is conventional in construction, and will not be detailed herein for the sake of brevity. Examples of the pressure-sensing device 4 that can be applied with the power supply unit of this invention are those disclosed in the aforementioned U.S. Patent Nos. 4,048,614 and 5,798,689.

The power supply unit of the first preferred embodiment includes a tubular valve housing 7, an air valve member 8, a biasing member 8', and a battery housing 6 adapted to receive a battery cell 5 therein.

The valve housing 7 is made of an electrically conductive material, and has an outer end portion 71, an inner end portion 72, and an intermediate portion 73 between the outer and inner end portions 71, 72. The valve housing 7 has an inner wall surface confining a longitudinal air passage 70 that extends from the outer end portion 71 through the inner end portion 72. The intermediate portion 73 is adapted to be mounted on the wheel rim 31 in an airtight manner such that the inner end portion 72 extends into the chamber confined by the wheel rim 31 and the pneumatic tire 32, and such that the outer end portion 71 extends outwardly from the wheel rim 31. In the preferred embodiment, the inner end portion 72 is formed with an external screw thread for engaging threadedly an air inlet of the pressure-sensing device 4. However, it should be noted that it is not absolutely necessary to form a mechanical connection between the inner end portion 72 and the pressure-sensing device 4.

The air valve member 8 is disposed inside the valve housing 7 proximate to the outer end portion 71. The biasing member 8' is disposed inside the valve housing 7 proximate to the inner end portion 72.

The air valve member 8 includes a valve seat 81 and a spring-loaded valve stem 80. The valve seat 81 includes a hollow cap body 810 and a hollow valve seat body 811. The cap body 810 is formed with an external screw thread for engaging threadedly an internal screw thread in the air passage 70. The cap body 810 has a first end provided with an end wall 8100, and an open second end opposite to the end wall 8100. The valve seat body 811 has a tubular end portion 8110 that extends slidably into the open second end of the cap body 810, and a tapering end portion 8111 that extends from the tubular end portion 8110 away from the cap body 810. The tapering end portion 8111 is wider than the tubular end portion 8110, and tapers in a direction away from the tubular end portion 8110. A seal ring 82, formed from an insulator material, is disposed around the tapering end portion 8111 and establishes an airtight seal between the tapering end portion 8111 and the inner wall surface of the valve housing 7. The cap body 810 is formed from an insulator material such that electric current flow from the valve housing 7 through the cap body 810 is not possible. The valve seat body 811 can be formed from an insulator material or an electrically conductive material. Even if the valve seat body 811 is formed from an electrically conductive material, the valve seat body 811 can be electrically insulated from the valve housing 7 because the cap body 810 and the seal ring 82 are both formed from an insulator material.

The valve stem 80 includes a stem body 80a that extends through the valve seat 81 and that is made from an electrically conductive material. The stem body 80a has a first end section disposed proximate to the outer end portion 71 of the valve housing 7, an intermediate section extending through the end wall 8100 of the cap body 810 and formed with a radial flange 800 for abutting against one side of the end wall 8100 that is disposed distal to the outer end portion 71 of the valve housing 7, and a second end section extending out of the valve seat body 811 and having a valve piece 801 connected thereto. The valve stem 80 further includes a coil spring 802 sleeved on the intermediate section of the stem body 80a and disposed in the valve seat 81. One end of the coil spring 802 abuts against the radial flange 800. The other end of the coil spring 802 abuts against the inner wall surface of the tapering end portion 8111 of the valve seat body 811. The coil spring 802 thus biases the stem body 80a such that the valve piece 801 closes sealingly an open end of the tapering end portion 8111 of the valve seat body 811, thereby blocking air flow through the valve seat 81. Due to the seal ring 82 and the valve piece 801, air in the tire 32 does not leak out of the valve housing 7.

Except for the valve piece 801, the construction of the biasing member 8' is similar to that of the air valve member 8. The biasing member 8' includes a seat member 81' and a spring-loaded biasing stem 80'. The seat member 81' is formed with an external screw thread for engaging threadedly an internal screw thread in the air passage 70. The portion of the seat member 81' that is in contact with the valve housing 7, e.g. the cap body 810', is made from an insulator material. The seat body 811' of the seat member 81' can be formed from an insulator material or an electrically conductive material. The biasing stem 80', which is formed from an electrically conductive material, extends through the seat member 81', and acts on the stem body 80a to bias the valve piece 801 to block air flow through the valve seat 81. The biasing stem 80' is in constant electrical contact with the stem body 80a.

When the force applied on the first end section of the stem body 80a is sufficient to counteract the forces of the coil spring 802 and the biasing stem 80', the stem body 80a will move relative to the valve seat 81 to compress the coil spring 802 and to result in corresponding movement of the biasing stem 80' relative to the seat member 81'. The valve piece 801 is thus moved away from the open end of the tapering end portion 8111 of the valve seat body 811, thereby permitting air to flow into and out of the valve housing 7 via the valve seat 81 and the seat member 81'.

Because the valve housing 7 is formed from an electrically conductive material, the valve housing 7 is inherently provided with a housing conductor. First and second conductive wires 84, 85 are connected electrically to the biasing stem 80' and the housing conductor of the valve housing 7, and are further connected electrically to the pressure-sensing device 4 on the wheel rim 31.

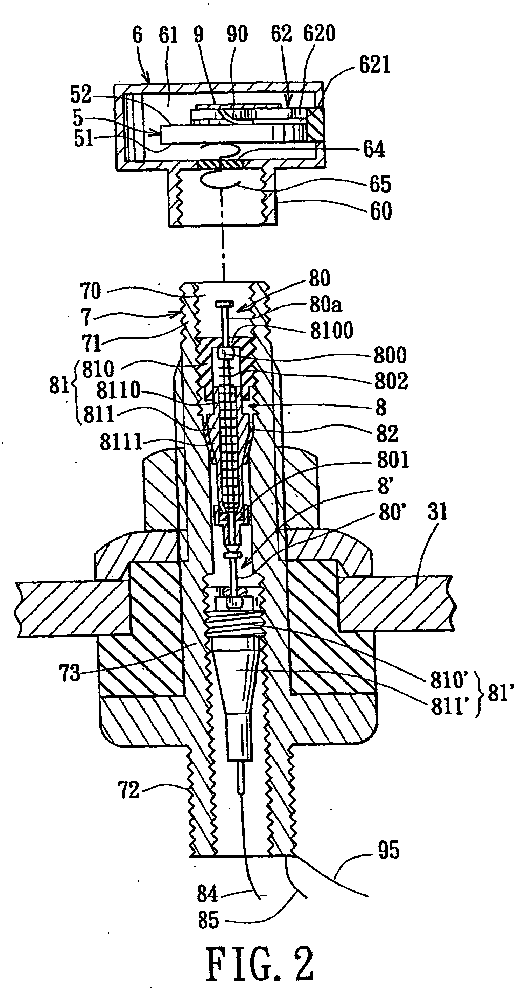

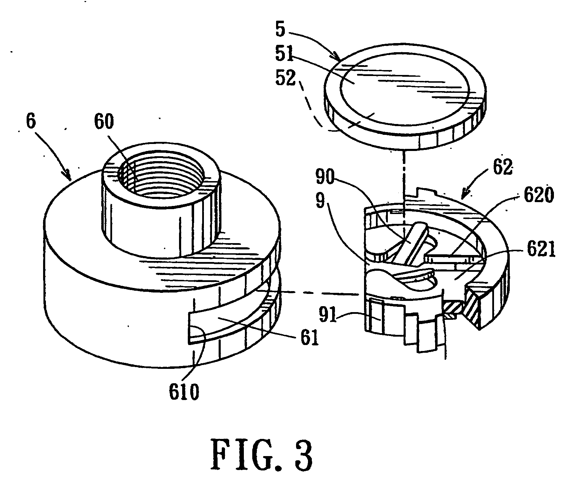

Referring to Figures 2 to 5, the battery housing 6 is formed from an electrically conductive material, and includes an internally threaded connecting portion 60 for mounting threadedly on the outer end portion 71 of the valve housing 7. The battery housing 6 further includes a battery confining portion 61 adapted to receive the battery cell 5 therein. The battery confining portion 61 has a surrounding wall formed with a peripheral slot 610 for access thereinto. A battery seat 62 is inserted removably into the battery confining portion 61 via the peripheral slot 610. In this embodiment, the battery cell 5 is a lithium battery cell having a positive terminal side 51 and an opposite negative terminal side 52. The periphery of the battery cell 5 is connected electrically to the negative terminal side 52. The battery seat 62 has a support plate 620 formed from an insulator material. One side of the support plate 620 is formed with a recess 621 that is adapted to receive the battery cell 5 therein. A contactor plate 9 formed from an electrically conductive material is mounted on another side of the support plate 620 opposite to the recess 621, and is formed with a resilient first battery contact part 90 that extends into the recess 621 for contacting the negative terminal side 52 of the battery cell 5. The contactor plate 9 is further formed with a conductive extension 91 that is bent to extend along an outer periphery of the support plate 620. Preferably, as best shown in Figure 3, the inner wall surface of the surrounding wall of the battery confining portion 61 is provided with a spring contact 63 for establishing physical contact with the conductive extension 91 when the battery seat 62 is inserted into the battery confining portion 61. As such, the battery housing 6 can be connected electrically with the negative terminal side 52 of the battery cell 5 via the contactor plate 9. In an alternative arrangement, the spring contact 63 can be integrated with the conductive extension 91 for establishing electrical connection with the battery housing 6.

At a junction of the battery confining portion 61 and the connecting portion 60, there is disposed a positioning member 64 formed from an insulator material. A conductive second battery contact 65 is mounted on the positioning member 64, and has a first portion that extends into the battery confining portion 61, and an opposite second portion that extends into the connecting portion 60. The first portion of the second battery contact 65 is adapted to abut against the positive terminal side 51 of the battery cell 5 when the latter is disposed in the battery confining portion 61. Because the battery cell 5 is disposed in the battery seat 62, which is formed from an insulator material, and because the second battery contact 65 is mounted on the positioning member 64, which is also formed from an insulator material, electrical connection between the positive terminal side 51 of the battery cell 5 and the battery housing 6 can be avoided.

When the battery housing 6 is mounted threadedly on the outer end portion 71 of the valve housing 7, the battery housing 6 is connected electrically to the valve housing 7 to connect the conductive wire 85 and, in turn, the pressure-sensing device 4 to the negative terminal side 52 of the battery cell 5. At the same time, the second portion of the second battery contact 65 abuts against the stem body 80a of the valve stem 80, thereby connecting electrically the conductive wire 84 and, in turn, the pressure-sensing device 4 to the positive terminal side 51 of the battery cell 5 via the stem body 80a and the biasing stem 80'. Electric power can thus be supplied to the pressure-sensing device 4 at this time.

When the stored power of the battery cell 5 has been used up, the battery seat 62 can be removed from the battery housing 6 externally of the airtight chamber formed between the wheel rim 31 and the pneumatic tire 32 to replace the battery cell 5. Replacement of the battery cell 5 is thus facilitated in the power supply unit of the present invention.

In actual design, the spring force of the second battery contact 65 is smaller than that of the coil spring 802 of the air valve member 8 to prevent erroneous operation of the air valve member 8.

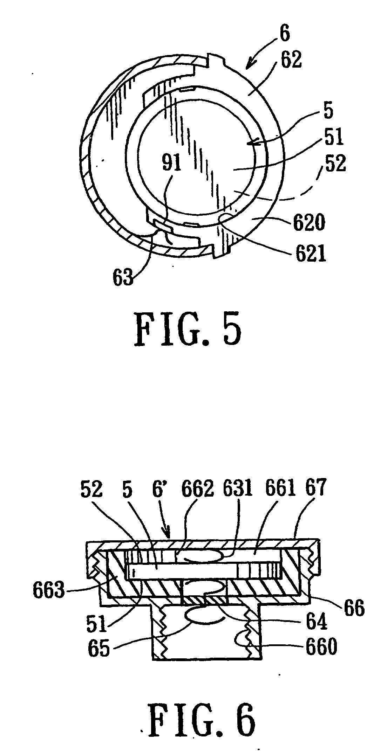

Figure 6 illustrates a modified battery housing 6' of a power supply unit according to the present invention. The battery housing 6' includes a conductive mounting seat 66 and a conductive cover member 67. The mounting seat 66 includes an internally threaded connecting portion 660 for mounting threadedly on the outer end portion 71 of the valve housing 7 (see Figure 2). The mounting seat 66 further includes a battery confining portion 661, and has an open end for access into the battery confining portion 661. A battery seat 663 is mounted removably in the battery confining portion 661. The battery seat 663 is formed from an insulator material and has one side formed with a recess 662 that is adapted to receive the battery cell 5 therein. As such, electrical connection between the battery cell 5 and the battery housing 6' is not possible via the battery seat 663. The cover member 67 is formed with an internal screw thread for engaging threadedly an external screw thread on the battery confining portion 661 of the mounting seat 66. As such, the cover member 67 can be mounted removably on the open end of the mounting seat 66 to close the battery confining portion 661 of the mounting seat 66 and retain the battery cell 5 in the latter. At a junction of the battery confining portion 661 and the connecting portion 660, there is disposed a positioning member 64 formed from an insulator material. A conductive second battery contact 65 is mounted on the positioning member 64, and has a first portion that extends into the battery confining portion 661, and an opposite second portion that extends into the connecting portion 660. The first portion of the second battery contact 65 extends through the battery seat 663 and into the recess 662 so as to be adapted to abut against the positive terminal side 51 of the battery cell 5 when the latter is disposed in the battery confining portion 661. The cover member 67 has an end wall provided with a conductive first battery contact 631 that is adapted to abut against the negative terminal side 52 of the battery cell 5, thereby establishing electrical connection between the battery housing 6' and the negative terminal side 52 of the battery cell 5.

Therefore, when the stored power of the battery cell 5 has been used up, the cover member 67 can be detached from the mounting seat 66 externally of the airtight chamber formed between the wheel rim 31 and the pneumatic tire 32 to replace the battery cell 5. Replacement of the battery cell 5 is thus facilitated.

Referring again to Figure 2, in the first preferred embodiment, the valve housing 7 has the air valve member 8 and the biasing member 8' disposed therein. As such, in the event that the air valve member 8 is defective and has to be replaced, electrical connection with the pressure-sensing device 4 need not be disturbed since the conductive wires 84, 85 are connected to the biasing stem 80' of the biasing member 8' and the valve housing 7, respectively.

Figure 8 illustrates the second preferred embodiment of a power supply unit according to the present invention. Unlike the previous embodiment, there is no biasing member 8'. Thus, the conductive wire 84 is connected directly to the stem body 80a of the valve stem 80. Replacement of the battery cell 5 is still convenient to conduct in this embodiment since the battery housing 6 is disposed externally of the airtight chamber formed between the wheel rim 31 and the pneumatic tire (not shown).

As to the connection between the pressure-sensing device 4 and the wheel rim 31, this is not critical to the present invention as long as the conductive wires 84, 85 can establish electrical connection between the power supply unit of this invention and the pressure-sensing device 4.

Preferably, the power supply unit further comprises a signal antenna 95 having one end connected electrically to the valve housing 7, and an opposite end adapted to be connected electrically to the pressure-sensing device 4. As such, a pressure signal generated by the pressure-sensing device 4 can be transmitted wirelessly via the signal antenna 95.

In the embodiments described beforehand, the battery housing 6, 6' and the valve housing 7 are both made from an electrically conductive material. However, it should be noted that it is not absolutely necessary to form the battery housing 6, 6' and the valve housing 7 from the conductive material. The battery housing 6, 6' and the valve housing 7 can be formed from an insulator material with a conductive coating or an embedded conductive circuit to achieve the same effect. For example, a valve housing formed from an insulator material can be embedded or adhered with a conductive circuit capable of establishing electrical connection with the contacts 63, 631 of the battery housing 6, 6'. In another example, a battery housing 6' formed from an insulator material can have the contacts 631, 65 embedded therein and extending out of the same so that, when the battery housing 6' is mounted on the valve housing 7, the contact 631 can establish electrical connection with the valve housing 7, while the battery contact 65 can establish electrical connection with the stem body 80a of the valve stem 80.

## Claims

1. A valve assembly with a power supply unit, the valve assembly being adapted for use with a pressure-sensing device (4) in a vehicle wheel (3), the vehicle wheel (3) including a wheel rim (31) and a pneumatic tire (32) mounted on the wheel rim (31) so as to confine an airtight chamber therewith, the pressure-sensing device (4) being mounted on the wheel rim (31) inside the airtight chamber and being concealed by the pneumatic tire (32), the valve assembly including
a tubular valve housing (7) having an outer end portion (71), an inner end portion (72) and an intermediate portion (73) between the outer and inner end portions (71, 72), the valve housing (7) confining a longitudinal air passage (70) that extends from the outer end portion (71) through the inner end portion (72), the intermediate portion (73) being adapted to be mounted on the wheel rim (31) in an airtight manner such that the inner end portion (72) extends into the airtight chamber and such that the outer end portion (71) extends outwardly of the wheel rim (31), the valve housing (7) being provided with a housing conductor that extends from the outer end portion (71) to the inner end portion (72) and that is adapted to be connected electrically to the pressure-sensing device (4),
an air valve member (8) mounted in the air passage (70) of the valve housing (7) and operable so as to control air flow through the air passage (70), and
a battery housing (6, 6') mounted on the outer end portion (71) of the valve housing (7) and adapted to receive a battery cell (5) therein, the battery housing (6, 6') being provided with electrically isolated first and second battery contacts (90, 631, 65) adapted to connect electrically and respectively with first and second terminals (52, 51) of the battery cell (5) when the battery cell (5) is received in the battery housing (6, 6'),
the air valve member (8) includes a spring-loaded valve stem (80) with a conductive stem body (80a) that is adapted to be connected electrically to the pressure-sensing device (4), and insulation means for electrically insulating the stem body (80a) from the housing conductor,
the first and second battery contacts (90, 631, 65) establishing electrical connection with the housing conductor and the conductive stem body (80a), respectively, when the battery housing (6, 6') is mounted on the outer end portion (71) of the valve housing (7),
the battery housing (6, 6') including a connecting portion (60, 660) mounted removably on the outer end portion (71) of the valve housing (7), and a battery confining portion (61, 661) adapted to receive the battery cell (5) therein, the first battery contact (90, 631) being provided in the battery confining portion (61, 661), the second battery contact (65) being mounted in the battery housing (6, 6') at a junction of the connecting portion (60, 660) and the battery confining portion (61, 661),
**characterized in that**:
the valve housing (7) and the battery housing (6, 6') being formed from an electrically conductive material such that the valve housing (7) is provided inherently with the housing conductor, and such that the first battery contact (90, 631) is connected electrically to the valve housing (7) via the battery housing (6, 6').

2. The valve assembly as defined in Claim 1, further **characterized in that** the connecting portion (60, 660) is mounted threadedly on the outer end portion (71) of the valve housing (7).

3. The valve assembly as defined in Claim 1, further **characterized in that** the battery housing (6') includes a mounting seat (66) formed with the connecting portion (660) and the battery confining portion (661), the mounting seat (66) having an open end for access into the battery confining portion (661), the battery housing (6') further including a cover member (67) mounted removably on the open end of the mounting seat (66) to close the battery confining portion (660).

4. The valve assembly as defined in Claims 1 or 3, further **characterized in that** the battery housing (6, 6') has a positioning member (64) formed from an insulator material and disposed at the junction of the connecting portion (60, 660) and the battery confining portion (61, 661), the second battery contact (65) being mounted on the positioning member (64) and having a first portion that extends into the battery confining portion (61, 661) and that is adapted to contact the second terminal (51) of the battery cell (5), and a second portion that extends into the connecting portion (60, 660) and that contacts the conductive stem body (80a) when the battery housing (6, 6') is mounted on the outer end portion (71) of the valve housing (7).

5. The valve assembly as defined in Claim 4, further **characterized in that** the battery confining portion (61) has a battery seat (62) mounted removably therein, the battery seat (62) having a support plate (620) formed from an insulator material, the support plate (620) having one side formed with a recess (621) that is adapted to receive the battery cell (5) therein, the battery seat (62) further having a contactor plate (9) formed from an electrically conductive material and mounted on another side of the support plate (620) opposite to the recess (621), the contactor plate (9) being formed with the first battery contact (90) that extends into the recess (621) and being further formed with a conductive extension (91) for physical contact with the battery housing (6) so as to be adapted to establish electrical connection between the battery housing (6) and the first terminal (52) of the battery cell (5).

6. The valve assembly as defined in Claim 5, further **characterized in that** the battery confining portion (61) has a surrounding wall formed with a peripheral slot (610) for access thereinto, the battery seat (62) being inserted into the battery confining portion (61) via the peripheral slot (610).

7. The valve assembly as defined in Claim 4, further **characterized in that** the battery confining portion (661) has a battery seat (663) mounted removably therein, the battery seat (663) being formed from an insulator material and having one side formed with a recess (662) that is adapted to receive the battery cell (5) therein, the first battery contact (631) being provided on the cover member (67), the first portion of the second battery contact (65) extending into the recess (662) of the battery seat (663) so as to be adapted to contact the second terminal (51) of the battery cell (5).

8. The valve assembly as defined in any one of the preceding claims, **characterized in that** the air valve member (8) further includes a hollow valve seat (81) mounted in the air passage (70), the stem body (80a) of the valve stem (80) having one end that extends through the valve seat (81) and that is provided with a valve piece (801), the valve stem (80) further including a coil spring (802) disposed around the stem body (80a) inside the valve seat (81) so as to bias the stem body (80a) such that the valve piece (801) normally blocks the air flow through the valve seat (81).

9. The valve assembly as defined in Claim 8, further **characterized in that** the valve seat (81) is formed from an insulator material and serves as the insulation means.

10. The valve assembly as defined in Claim 8, further **characterized in that** the valve seat (81) is formed from an electrically conductive material and has a seal ring (82) disposed therearound for establishing an airtight seal with the valve housing (7), the seal ring (82) being formed from an insulator material and serving as the insulation means.

11. The valve assembly as defined in any one of the preceding claims, **characterized in that** the air valve member (8) is mounted in the air passage (70) proximate to the outer end portion (71) of the valve housing (7), the valve assembly further including a biasing member (8') mounted in the air passage (70) proximate to the inner end portion (72) of the valve housing (7), the biasing member (8') including a spring-loaded biasing stem (80') formed from an electrically conductive material, the biasing stem (80') having one end acting on the stem body (80a) of the valve stem (80) and an opposite end that is adapted to be connected electrically to the pressure-sensing device (4) such that electrical connection between the stem body (80a) and the pressure-sensing device (4) is established via the biasing stem (80').

12. The valve assembly as defined in any one of the preceding claims, further **characterized by** a signal antenna (95) having one end connected electrically to the valve housing (7), and an opposite end adapted to be connected electrically to the pressure-sensing device (4), the signal antenna (95) being adapted to transmit wirelessly a pressure signal generated by the pressure-sensing device (4).

## Patentansprüche

1. Eine Ventilbaugruppe mit einer Stromversorgungseinheit, wobei die Ventilbaugruppe eingerichtet ist für die Verwendung mit einer Druckmesseinrichtung (4) in einer Fahrzeugfelge (3), wobei die Fahrzeugfelge (3) einen Felgenrand (31) und einen auf dem Felgenrand (31) angebrachten luftdruckbetätigten Reifen (32) einschließt, um dadurch eine luftdichte Kammer zu umschließen, wobei die Druckmesseinrichtung (4) auf dem Felgenrand (31) innerhalb der luftdichten Kammer angebracht ist und durch den luftdruckbetätigten Reifen (32) umschlossen ist, wobei die Ventilbaugruppe einschließt:
ein röhrenförmiges Ventilgehäuse (7) mit einem äußeren Endabschnitt (71), einem inneren Endabschnitt (72) und einem Mittelabschnitt (73) zwischen den äußeren und inneren Endabschnitten (71, 72), wobei das Ventilgehäuse (7) einen längslaufenden Luftdurchlass (70) umschließt, welcher sich von dem äußeren Endabschnitt (71) durch den inneren Endabschnitt (72) erstreckt, wobei der Mittelabschnitt (73) eingerichtet ist, um auf dem Felgenrand (31) in luftdichter Weise derart angebracht zu sein, dass sich der innere Endabschnitt (72) in die luftdichte Kammer erstreckt und derart, dass sich der äußere Endabschnitt (71) von dem Felgenrand (31) nach außen erstreckt, wobei das Ventilgehäuse (7) mit einem Gehäuseleiter ausgestattet ist, welcher sich von dem äußeren Endabschnitt (71) zu dem inneren Endabschnitt (72) erstreckt und welcher eingerichtet ist, um elektrisch mit der Druckmesseinrichtung (4) verbunden zu sein,
ein Luftventilelement (8), welches in den Luftdurchlass (70) des Ventilgehäuses (7) eingebaut und betreibbar ist, um den Luftfluss durch den Luftdurchlass (70) zu steuern, und
ein Batteriegehäuse (6, 6'), welches auf dem äußeren Endabschnitt (71) des Ventilgehäuses (7) angebracht ist und eingerichtet ist, um eine Batteriezelle (5) darin aufzunehmen, wobei das Batteriegehäuse (6, 6') mit elektrisch isolierten ersten und zweiten Batteriekontakten (90, 631, 65) ausgestattet ist, welche eingerichtet sind, um elektrisch jeweils mit ersten und zweiten Anschlüssen (51, 52) der Batteriezelle (5) verbunden zu sein, wenn die Batteriezelle (5) in dem Batteriegehäuse (6, 6') aufgenommen ist,
wobei das Luftventilelement (8) einen federgespannten Ventilschaft (80) mit einem leitenden Schaftkörper (80a), welcher eingerichtet ist, um elektrisch mit der Druckmessvorrichtung (4) verbunden zu sein, und eine Isolationseinrichtung einschließt zum elektrischen Isolieren des Schaftkörpers (80a) von dem Gehäuseleiter,
wobei die ersten und zweiten Batteriekontakte (90, 631, 65) eine elektrische Verbindung mit jeweils dem Gehäuseleiter und dem leitenden Schaftkörper (80a) herstellen, wenn das Batteriegehäuse (6, 6') auf dem äußeren Endabschnitt (71) des Ventilgehäuses (70) angebracht ist,
wobei das Batteriegehäuse (6, 6') einen Verbindungsabschnitt (60, 660), welcher abnehmbar auf dem äußeren Endabschnitt (71) des Ventilgehäuses (7) angebracht ist, und einen Batterieumfassungsabschnitt (61, 661) einschließt, welcher eingerichtet ist, um die Batteriezelle (5) darin aufzunehmen, wobei der erste Batteriekontakt (90, 631) in dem Batterieumfassungsabschnitt (61, 661) bereitgestellt wird, der zweite Batteriekontakt (65) in dem Batteriegehäuse (6, 6') an einer Anschlussstelle des Verbindungsabschnitts (60, 660) und des Batterieumfassungsabschnitts (61, 661) angebracht ist,
**dadurch gekennzeichnet, dass**
das Ventilgehäuse (7) und das Batteriegehäuse (6, 6') aus elektrisch leitendem Material derart gebildet sind, dass das Ventilgehäuse (7) von sich aus mit dem Gehäuseleiter ausgestattet ist, und derart, dass der erste Batteriekontakt (90, 631) mit dem Ventilgehäuse (7) über das Batteriegehäuse (6, 6') elektrisch verbunden ist.

2. Die Ventilbaugruppe gemäß Anspruch 1, weiter **dadurch gekennzeichnet, dass** der Verbindungsabschnitt (60, 660) schraubend auf dem äußeren Endabschnitt (71) des Ventilgehäuses (7) angebracht wird.

3. Die Ventilbaugruppe gemäß Anspruch 1, weiterhin **dadurch gekennzeichnet, dass** das Batteriegehäuse (6') einen Montagesitz (66) einschließt, welcher mit dem Verbindungsabschnitt ausgebildet ist und der Batterieumfassungsabschnitts (661), der Montagesitz (66) ein offenes Ende aufweisen zum Zugriff in den Batterieumfassungsabschnitts (661, wobei das Batteriegehäuse (6') weiterhin ein Deckelelement (67) einschließt, welches entfernbar auf dem offenen Ende des Montagesitzes (66) angebracht ist, um den Batterieumfassungsabschnitt (661) zu schließen.

4. Die Ventilbaugruppe gemäß Anspruch 1 oder 3, weiterhin **dadurch gekennzeichnet, dass** das Batteriegehäuse (6, 6') ein Positionierelement (64) aufweist, welches aus einem Isolatormaterial ausgebildet ist und an der Anschlußstelle des Verbindungsabschnitts (60, 660) und der Batterieumfassungsabschnitt (61, 661) angeordnet ist, der zweite Batteriekontakt (65) auf dem Positionierelement (64) angebracht ist und einen ersten Abschnitt aufweist, welcher sich in den Batterieumfassungsabschnitt (61, 661) erstreckt, und welcher eingerichtet ist, um den zweiten Anschluss (51) der Batteriezelle (5) zu berühren, und einen zweiten Abschnitt aufweist, welcher sich in den Verbindungsabschnitt (60, 660) hinein erstreckt, und welcher den leitenden Schaftkörper (80a) berührt, wenn das Batteriegehäuse (6, 6') auf dem äußeren Endabschnitt (71) des Ventilgehäuses (7) angebracht wird.

5. Die Ventilbaugruppe gemäß Anspruch 4, weiterhin **dadurch gekennzeichnet, dass** der Batterieumfassungsabschnitt (61) einen Batteriesitz (62) aufweist, welcher darin entfernbar angebracht ist, wobei der Batteriesitz (62) eine aus einem Isolatormaterial ausgebildete Trägerplatte (620) aufweist, wobei die Trägerplatte (620) eine Seite mit einer Aussparung (621) aufweist, welche eingerichtet ist, um die Batteriezelle (5) darin aufzunehmen, wobei der Batteriesitz (62) weiterhin eine Kontaktplatte (9) aufweist, welche aus einem elektrisch leitenden Material gebildet ist und welche auf einer anderen Seite der Trägerplatte (620) gegenüber der Aussparung (621) angebracht ist, wobei die Kontaktplatte (9) mit einem ersten Batteriekontakt (90) ausgebildet ist, welcher sich in die Aussparung (621) hinein erstreckt und weiterhin mit einem leitenden Ansatzstück (91) ausgebildet ist für den körperlichen Kontakt mit dem Batteriegehäuse (6), um so eingerichtet zu sein, dass eine elektrische Verbindung zwischen dem Batteriegehäuse (6) und dem ersten Anschluss (52) der Batteriezelle (5) hergestellt wird.

6. Die Ventilbaugruppe gemäß Anspruch 5, weiterhin **dadurch gekennzeichnet, dass** der Batterieumfassungsabschnitt (61) eine umlaufende Wand aufweist, welche mit einem Umfangsschlitz (610) für den Zutritt in denselben ausgebildet ist, wobei der Batteriesitz (62) in den Batterieumfassungsabschnitt (61) durch den Umfangsschlitz (610) eingesetzt wird.

7. Die Ventilbaugruppe gemäß Anspruch 4, weiterhin **dadurch charakterisiert,** dass der Batterieumfassungsabschnitt (661) einen Batteriesitz (663) aufweist, welcher darin entfernbar angebracht ist, wobei der Batteriesitz (663) aus einem Isolatormaterial ausgebildet ist und eine Seite aufweist, welche mit einer Aussparung (662) ausgebildet ist, welche eingerichtet ist, um die Batteriezelle (5) darin aufzunehmen, wobei der erste Batteriekontakt (631) auf der Deckeleinheit (67) bereitgestellt wird, wobei der erste Abschnitt des zweiten Batteriekontakts (65) in die Aussparung (662) des Batteriesitzes (663) sich hinein erstreckt, um eingerichtet zu sein, um den zweiten Anschluss (51) der Batteriezelle (5) zu berühren.

8. Die Ventilbaugruppe gemäß irgendeinem der vorstehenden Ansprüche, **dadurch gekennzeichnet, dass** die Luftventilelement (8) weiterhin einen hohlen Ventilsitz (81) einschließt, welcher in dem Luftdurchlass (70) angebracht ist, wobei der Schaftkörper (80a) des Ventilschafts (80) ein Ende aufweist, welches sich durch den Ventilsitz (81) erstreckt und welches mit einem Ventilstück (801) ausgestattet ist, wobei der Ventilschaft (80) weiterhin eine Spiralfeder (802) einschließt, welche um den Schaftkörper (80a) innerhalb des Ventilsitzes (81) angeordnet ist, um den Schaftkörper (80a) derart zu spannen, dass das Ventilstück (801) normalerweise den Luftfluss durch den Ventilsitz (81) blockiert.

9. Die Ventilbaugruppe gemäß Anspruch 8, weiterhin **dadurch gekennzeichnet, dass** der Ventilsitz (81) aus einem Isolatormaterial ausgebildet ist und als Isolationsvorrichtung dient.

10. Die Ventilbaugruppe gemäß Anspruch 8, weiterhin **dadurch gekennzeichnet, dass** der Ventilsitz (81) aus einem elektrisch leitenden Material ausgebildet ist und einen Dichtungsring (82) aufweist, welcher um denselben herum angeordnet ist, um einen luftdichten Abschluss mit dem Ventilgehäuse (7) herzustellen, wobei der Dichtungsring (82) aus einem Isolatormaterial ausgebildet ist und als Isolationseinrichtung dient.

11. Die Ventilbaugruppe gemäß einem der vorstehenden Ansprüche, **dadurch gekennzeichnet, dass** die Luftventilelement (8) in dem Luftdurchlass (70) nahe dem äußeren Endabschnitt (71) des Ventilgehäuses (7) angebracht ist, wobei die Ventilbaugruppe weiterhin eine Spanneinheit (8') einschließt, welche in dem Luftdurchlass (70) nahe dem inneren Endabschnitt (72) des Ventilgehäuses (7) angebracht ist, wobei die Spanneinheit (8') einen federgespannten Spannschaft (80') einschließt, welcher aus einem elektrisch leitenden Material ausgebildet ist, wobei der Spannschaft (80') ein Ende aufweist, welches auf den Schaftkörper (80a) des Ventilschafts (80) wirkt und ein entgegengesetztes Ende aufweist, welches eingerichtet ist, um mit der Druckmesseinrichtung (4) elektrisch derart verbunden zu sein, dass elektrische Verbindung zwischen dem Schaftkörper (80a) und der Druckmesseinrichtung (4) über den Spannschaft (80') hergestellt wird.

12. Die Ventilbaugruppe gemäß einem der vorstehenden Ansprüche, weiterhin **gekennzeichnet durch** eine Signalantenne (95) mit einem Ende, welches elektrisch mit dem Ventilgehäuse (7) verbunden ist und einem gegenüberliegende Ende, welches eingerichtet ist, um elektrisch mit der Druckmesseinrichtung (4) verbunden zu sein, wobei die Signalantenne (95) eingerichtet ist, um drahtlos ein Drucksignal, welches **durch** die Druckmesseinrichtung (4) erzeugt wird, zu übertragen.

## Revendications

1. Ensemble de valve équipé d'une unité d'alimentation électrique, l'ensemble de valve étant agencé pour être utilisé avec un dispositif de détection de pression (4) dans une roue de véhicule (3), la roue de véhicule (3) comprenant une jante de roue (31) et un pneu (32) monté sur la jante de roue (31) de manière à former une chambre étanche à l'air avec celle-ci, le dispositif de détection de pression (4) étant monté sur la jante de roue (31) à l'intérieur de la chambre étanche à l'air et étant dissimulé par le pneu (32), l'ensemble de valve comprenant:
un boîtier de valve tubulaire (7) comprenant une partie d'extrémité extérieure (71), une partie d'extrémité intérieure (72) et une partie intermédiaire (73) entre les parties d'extrémité extérieure et intérieure (71, 72), le boîtier de valve (7) formant un passage d'air longitudinal (70) qui s'étend à partir de la partie d'extrémité extérieure (71) à travers la partie d'extrémité intérieure (72), la partie intermédiaire (73) étant agencée pour être montée sur la jante de roue (31) d'une manière étanche à l'air, de telle sorte que la partie d'extrémité intérieure (72) s'étende dans la chambre étanche à l'air, et de telle sorte que la partie d'extrémité extérieure (71) s'étende vers l'extérieur de la jante de roue (31), le boîtier de valve (7) étant pourvu d'un conducteur de boîtier qui s'étend à partir de la partie d'extrémité extérieure (71) jusqu'à la partie d'extrémité intérieure (72) et qui est agencé pour être connecté électriquement au dispositif de détection de pression (4),
un élément de valve à air (8) monté dans le passage d'air (70) du boîtier de valve (7) et pouvant être actionné afin de commander l'écoulement d'air à travers le passage d'air (70), et
un boîtier de batterie (6, 6') monté sur la partie d'extrémité extérieure (71) du boîtier de valve (7) et agencé pour recevoir une cellule de batterie (5) en lui, le boîtier de batterie (6, 6') étant pourvu de premier et deuxième contacts de batterie électriquement isolés (90, 631, 65) agencés pour être connectés électriquement et respectivement à des première et deuxième bornes (52, 51) de la cellule de batterie (5) lorsque la cellule de batterie (5) est reçue à l'intérieur du boîtier de batterie (6, 6'),
l'élément de valve à air (8) comprend une tige de valve contrainte par ressort (80) présentant un corps de tige conducteur (80a) qui est agencé pour être connecté électriquement au dispositif de détection de pression (4), et un moyen d'isolation destiné à isoler électriquement le corps de tige (80a) par rapport au conducteur de boîtier,
les premier et deuxième contacts de batterie (90, 631, 65) établissent une connexion électrique avec le conducteur de boîtier et avec le corps de tige conducteur (80a), respectivement, lorsque le boîtier de batterie (6, 6') est monté sur la partie d'extrémité extérieure (71) du boîtier de valve (7),
le boîtier de batterie (6, 6') comprend une partie de connexion (60, 660) montée d'une façon amovible sur la partie d'extrémité extérieure (71) du boîtier de valve (7), et une partie de logement de batterie (61, 661) agencée pour recevoir la cellule de batterie (5) en elle, le premier contact de batterie (90, 631) étant prévu dans la partie de logement de batterie (61, 661), et le deuxième contact de batterie (65) étant monté dans le boîtier de batterie (6, 6') à une jonction de la partie de connexion (60, 660) et de la partie de logement de batterie (61, 661),
**caractérisé en ce que**:
le boîtier de valve (7) et le boîtier de batterie (6, 6') sont constitués d'un matériau électriquement conducteur, de telle sorte que le boîtier de valve (7) soit pourvu d'une façon inhérente du conducteur de boîtier, et de telle sorte que le premier contact de batterie (90, 631) soit connecté électriquement au boîtier de valve (7) par l'intermédiaire du boîtier de batterie (6, 6').

2. Ensemble de valve suivant la revendication 1, **caractérisé en outre en ce que** la partie de connexion (60, 660) est montée d'une façon vissée sur la partie d'extrémité extérieure (71) du boîtier de valve (7).

3. Ensemble de valve suivant la revendication 1, **caractérisé en outre en ce que** le boîtier de batterie (6') comprend un siège de montage (66) formé avec la partie de connexion (660) et la partie de logement de batterie (661), le siège de montage (66) présentant une extrémité ouverte afin de permettre l'accès dans la partie de logement de batterie (661), le boîtier de batterie (6') comprenant en outre un élément de couvercle (67) monté d'une façon amovible sur l'extrémité ouverte du siège de montage (66) afin de fermer la partie de logement de batterie (660).

4. Ensemble de valve suivant la revendication 1 ou la revendication 3, **caractérisé en outre en ce que** le boîtier de batterie (6, 6') comprend un élément de positionnement (64) constitué d'un matériau isolant et disposé à la jonction de la partie de connexion (60, 660) et de la partie de logement de batterie (61, 661), le deuxième contact de batterie (65) étant monté sur l'élément de positionnement (64) et présentant une première partie qui s'étend dans la partie de logement de batterie (61, 661) et qui est agencée pour être mise en contact avec la deuxième borne (51) de la cellule de batterie (5), et une deuxième partie qui s'étend dans la partie de connexion (60, 660) et qui entre en contact avec le corps de tige conducteur (80a) lorsque le boîtier de batterie (6, 6') est monté sur la partie d'extrémité extérieure (71) du boîtier de valve (7).

5. Ensemble de valve suivant la revendication 4, **caractérisé en outre en ce que** la partie de logement de batterie (61) comprend un siège de batterie (62) monté d'une façon amovible dans celle-ci, le siège de batterie (62) comprenant une plaque de support (620) constituée d'un matériau isolant, une face de la plaque de support (620) présentant un évidement (621) qui est agencé pour recevoir la cellule de batterie (5) en lui, le siège de batterie (62) comprenant en outre une plaque de contacteur (9) constituée d'un matériau électriquement conducteur et montée sur une autre face de la plaque de support (620) à l'opposé de l'évidement (621), la plaque de contacteur (9) étant formée avec le premier contact de batterie (90) qui s'étend dans l'évidement (621), et étant en outre formée avec une extension conductrice (91) destinée à réaliser un contact physique avec le boîtier de batterie (6) de manière à être agencé pour établir une connexion électrique entre le boîtier de batterie (6) et la première borne (52) de la cellule de batterie (5).

6. Ensemble de valve suivant la revendication 5, **caractérisé en outre en ce que** la partie de logement de batterie (61) comprend une paroi environnante présentant une fente périphérique (610) qui permet d'accéder à l'intérieur de celle-ci, le siège de batterie (62) étant inséré dans la partie de logement de batterie (61) à travers la fente périphérique (610).

7. Ensemble de valve suivant la revendication 4, **caractérisé en outre en ce que** la partie de logement de batterie (661) comprend un siège de batterie (663) monté d'une façon amovible en elle, le siège de batterie (663) étant constitué d'un matériau isolant et ayant une face présentant un évidement (662) qui est agencé pour recevoir la cellule de batterie (5) en lui, le premier contact de batterie (631) étant prévu sur l'élément de couvercle (67), la première partie du deuxième contact de batterie (65) s'étendant dans l'évidement (662) du siège de batterie (663) de manière à pouvoir être mise en contact avec la deuxième borne (51) de la cellule de batterie (5).

8. Ensemble de valve suivant l'une quelconque des revendications précédentes, **caractérisé en ce que** l'élément de valve à air (8) comprend en outre un siège de valve creux (81) monté dans le passage d'air (70), le corps de tige (80a) de la tige de valve (80) présentant une extrémité qui s'étend à travers le siège de valve (81) et qui est pourvue d'une pièce de valve (801), la tige de valve (80) comprenant en outre un ressort hélicoïdal (802) disposé autour du corps de tige (80a) à l'intérieur du siège de valve (81) de manière à pousser le corps de tige (80a) de telle sorte que la pièce de valve (801) bloque normalement l'écoulement d'air à travers le siège de valve (81).

9. Ensemble de valve suivant la revendication 8, **caractérisé en outre en ce que** le siège de valve (81) est constitué d'un matériau isolant et fait office de moyen d'isolation.

10. Ensemble de valve suivant la revendication 8, **caractérisé en outre en ce que** le siège de valve (81) est constitué d'un matériau électriquement conducteur et comprend un anneau d'étanchéité (82) disposé autour de lui pour établir un joint étanche à l'air avec le boîtier de valve (7), l'anneau d'étanchéité (82) étant constitué d'un matériau isolant et faisant office de moyen d'isolation.

11. Ensemble de valve suivant l'une quelconque des revendications précédentes, **caractérisé en ce que** l'élément de valve à air (8) est monté dans le passage d'air (70) à proximité de la partie d'extrémité extérieure (71) du boîtier de valve (7), l'ensemble de valve comprenant en outre un élément de poussée (8') monté dans le passage d'air (70) à proximité de la partie d'extrémité intérieure (72) du boîtier de valve (7), l'élément de poussée (8') comprenant une tige de poussée chargée par ressort (80') constituée d'un matériau électriquement conducteur, la tige de poussée (80') ayant une première extrémité qui agit sur le corps de tige (80a) de la tige de valve (80) et une extrémité opposée qui est agencée pour être connectée électriquement au dispositif de détection de pression (4), de telle sorte qu'une connexion électrique entre le corps de tige (80a) et le dispositif de détection de pression (4) soit établie par l'intermédiaire de la tige de poussée (80').

12. Ensemble de valve suivant l'une quelconque des revendications précédentes, **caractérisé en outre par** une antenne de signalisation (95) dont une première extrémité est connectée électriquement au boîtier de valve (7), et dont l'extrémité opposée est agencée pour être connectée électriquement au dispositif de détection de pression (4), l'antenne de signalisation (95) étant agencée pour transmettre sans fil un signal de pression généré par le dispositif de détection de pression (4).
